Europäisches Patentamt

European Patent Office

Office européen des brevets

(11) Veröffentlichungsnummer: **0 106 159**
**A2**

(12)

# EUROPÄISCHE PATENTANMELDUNG

(21) Anmeldenummer: 83109040.2

(22) Anmeldetag: 13.09.83

(51) Int. Cl.³: **H 04 N 1/41**

(30) Priorität: 14.09.82 DE 3234115

(43) Veröffentlichungstag der Anmeldung:
25.04.84 Patentblatt 84/17

(84) Benannte Vertragsstaaten:
DE FR GB NL SE

(71) Anmelder: SIEMENS AKTIENGESELLSCHAFT
Berlin und München Wittelsbacherplatz 2
D-8000 München 2(DE)

(72) Erfinder: Jahn, Alfred, Dipl.-Ing.
Winkstrasse 8
D-8000 München 70(DE)

(72) Erfinder: Schirenbeck, Günter, Dipl.-Ing.
Vingerstrasse 60
D-8000 München 70(DE)

(54) **System zur Übertragung von alphanumerischen Telefaxzeicheninformationen.**

(57) Zur Übertragung von alphanumerischen Telefaxzeichen über einen Teletex- beispielsweise auch einen Fernsprech-übertragungsweg werden die Telefaxzeichen jeweils einer Darstellungsform (Schrifttype) sendeseitig zunächst von einer Mustervorlage in eine Umsetzeinrichtung eingegeben und dort in einem besonderen Speicher äquivalenten Teletexzeichen zugeordnet. Bei der eigentlichen Übertragung werden in der Umsetzeinrichtung die den zu übertragenden Telefaxzeicheninformationen entsprechenden Teletexzeicheninformationen abgerufen und an den Übertragungsweg abgegeben. Empfangsseitig werden die Informationen auf einem Teletexgerät wiedergegeben. Eine Rückumsetzung der übertragenen Informationen in Telefaxdarstellung erlaubt auch deren Wiedergabe auf einem Telefaxgerät.

FIG 1

EP 0 106 159 A2

SIEMENS AKTIENGESELLSCHAFT
Berlin und München

Unser Zeichen
VPA 82 P 1 7 6 9 E

System zur Übertragung von alphanumerischen Telefaxzeicheninformationen.

Die Erfindung betrifft ein System zur Übertragung von alphanumerischen Telefaxzeicheninformationen mindestens einer Darstellungsform über Teletexübertragungsweg, beispielsweise auch über einen Fernsprechübertragungsweg in einer Fernsprechanlage bzw. zwischen verschiedenen Fernsprechanlagen.

Textkommunikation mit fernmeldetechnischen Mitteln gewinnt in zunehmendem Maße an Bedeutung. Die Informationen werden dabei über bestehende Fernmeldenetze und eigens konzipierte Netze, wie beispielsweise das Integrierte Text- und Datennetz (IDN) der Deutschen Bundespost übertragen. Zu den öffentlichen Diensten für die Textkommunikation zählen der sogenannte Telefax- und der Teletexdienst.

Der Teletexdienst bietet die Möglichkeit, alphanumerische Zeichen, die ansonsten durch eine gewöhnliche Büroschreibmaschine herstellbar sind, am Sendeort darzustellen und die so erzeugten Schreiben inhalt- und formgetreu zu beliebigen Teilnehmern dieses Dienstes zu übertragen. Der Telefaxdienst bietet die Möglichkeit, beliebig graphische dargestellte Informationen im Rahmen der gewählten Rasterfeinheit für Abtastung und Wiedergabe quasi originalgetreu zwischen beliebigen Teilnehmern dieses Dienstes zu übertragen. Der Vorteil der Übertragung beliebiger graphischer Informationen durch

Dl 1 Kel /10.9.82

0106159

punktweise Bildübertragung erfordert bei mit Schreibmaschinenschrift vergleichbarer Wiedergabequalität
allerdings eine um mehrere .Größenordnungen höhere
Informationsmenge und damit in Abhängigkeit von der
Übertragungsgeschwindigkeit entsprechend höhere Übertragungszeiten.

Der Erfindung liegt nun die Aufgabe zugrunde, ein System
anzugeben, das die Übertragung von alphanumerischen
Telefaxzeicheninformationen beliebiger Darstellungsform
in einfachster Weise über einen Teletexübertragungsweg ermöglicht.

Die Aufgabe wird in einem System gemäß der Erfindung
dadurch gelöst, daß alle alphanumerischen Telefaxzeichen jeweils einer Darstellungsform in ·einer vorgegebenen Reihenfolge ihrem Bedeutungsinhalt entsprechend äquivalenten Teletexzeichen zugeordnet
werden, daß zur Übertragung jeweils eines alphanumerischen, dem äquivalenten Teletexzeichens zugeordneten Telefaxzeichens dieses als solches erkannt
wird und daß das durch die Zuordnung bestimmte
Teletexzeichen an den Übertragungsweg abgegeben wird.

Die Erfindung bietet den Vorteil, daß alphanumerische
Telefaxzeicheninformationen gegenüber den sonst
erforderlichen Telefaxübertragungszeiten in kürzeren
Zeiten übertragen werden können.

Die Erfindung zeichnet sich auch durch den Vorteil aus,
daß alphanumerische Telefaxzeichen in beliebiger graphischer
Darstellung (Schrifttypen) über einen Teletexübertragungsweg übertragen werden können.

Die Erfindung bietet den weiteren Vorteil, daß Telefaxteilnehmer alphanumerische Zeichen auch an Teilnehmer
des Teletexdienstes übertragen können. Ebenso können alphanumerische Zeichen in vorteilhafter Weise nach Rückumsetzung an Telefaxteilnehmer übertragen werden.

Anhand der Zeichnungen wird die Erfindung nun in ein einen
zum Verständnis erforderlichen Umfang noch näher erläutert.
Dabei zeigt
FIG 1 das erfindungsgemäße Übertragungssystem in Blockschaltdarstellung,
FIG 2 ein Ausführungsbeispiel sendeseitiger Vorrichtungen
des erfindungsgemäßen Übertragungssystems,
FIG 3 ein Ausführungsbeispiel empfangsseitiger Vorrichtungen
des erfindungsgemäßen Übertragungssystems.

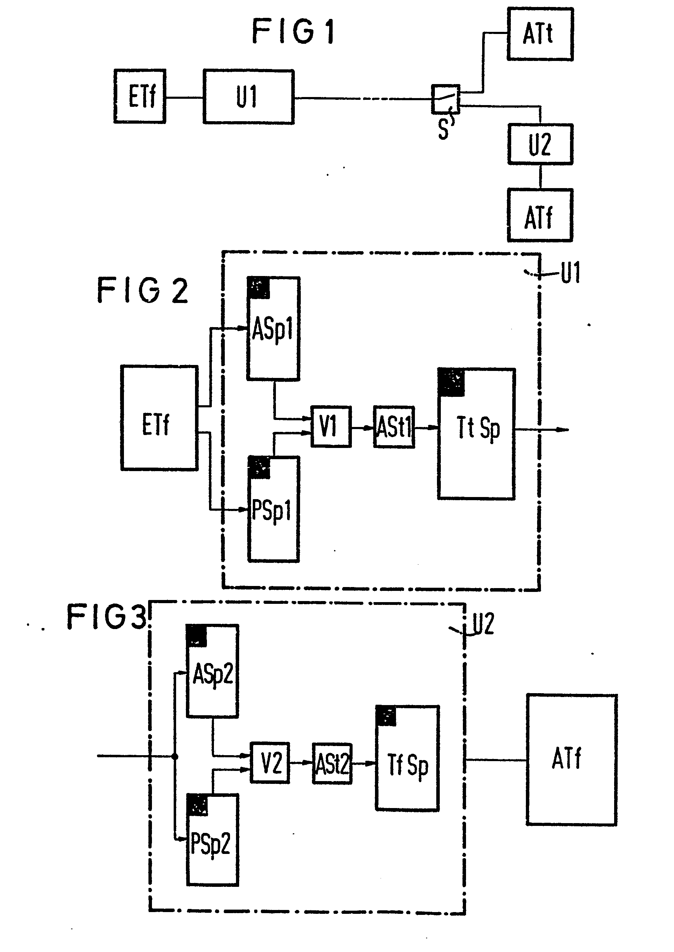

FIG 1 veranschaulicht das erfindungsgemäße Übertragungssystem, das aus sende- und empfangsseitigen Vorrichtungen
sowie dem Teletexübertragungsweg besteht. Zu den sendeseitigen Vorrichtungen gehören ein Eingabegerät ETf
zur Eingabe von Telefaxzeicheninformationen sowie eine
die Zuordnung und Umsetzung von Telefax- in Teletexzeicheninformationen bewirkende Umsetzeinrichtung U1. Die
auf den Teletexübertragungsweg abgegebenen Informationen
können über eine in der Zeichnung nicht dargestellte
Vermittlungseinrichtung an durch den übermittelnden Teilnehmer ausgewählte Teilnehmer des Dienstes übertragen
werden. Auf der Empfangsseite befindet sich ein Ausgabegerät ATt zur Darstellung der Teletexinformationen.
Ebenso können auf der Empfangsseite ein Schalter S,
eine Umsetzeinrichtung U2 sowie ein Ausgabegerät ATf zur
Darstellung von Telefaxinformationen angeordnet sein. Das
System gemäß der Erfindung ermöglicht ebenso die Übertragung von Teletexinformationen an Teilnehmer, die nur
über ein Ausgabegerät ATf zur Darstellung von Telefaxinformationen und eine Umsetzeinrichtung U2 zur Rückumsetzung der Teletex- in Telefaxdarstellung verfügen.

Die empfangsseitig eintreffenden Informationen können
bei Teilnehmern, die über beide Ausgabegerätetypen ATt
und ATf verfügen, über den Schalter S auf das eine
oder andere Ausgabegerät geleitet werden. Ebenso können
die eintreffenden Informationen auch gleichzeitig auf
beiden Ausgabegerätetypen dargestellt werden.

FIG 2 zeigt ein Ausführungsbeispiel sendeseitiger Vorrichtungen des erfinderischen Übertragungssystems. Diese
besteht aus dem Eingabegerät ETf und der Umsetzeinrichtung
U1, die einen Aufnahmespeicher ASp1, einen Pufferspeicher
PSp1, eine Vergleichsschaltung V1, eine Ansteuerschaltung
ASt1 und einen den eingegebenen Telefaxzeichen äquivalenten Teletexzeichen abgegebenen Teletexspeicher
TtSp umfaßt.
Das Eingabegerät ETf kann als Lesegerät ausgebildet sein,
das eingegebene Vorlagen optisch abtastet, die optisch
abgetasteten Werte in elektrische Signale umwandelt und
diese gegebenenfalls zum Einschreiben in den in der Umsetzereinrichtung U1 angeordneten Aufnahmespeicher ASp1
oder zur Übertragung aufbereitet.
Dem erfindungsgemäßen System können auch geeignete telefaxcodierte Informationen aus systemexternen Speichern
zugeführt werden.
Voraussetzungen für die Übertragung von alphanumerischen
Telefaxzeicheninformationen über einen Teletexübertragungsweg sind ihre vorherige Zuordnung zu äquivalenten Teletexzeicheninformationen beispielsweise anhand einer Mustervorlage und die Erkennung der zu übertragenen Telefaxzeichen beispielsweise durch Vergleich mit den von der
Mustervorlage abgeleiteten und dem System zugeführten
Informationen.
Diese Mustervorlagen können mittels gewöhnlicher
Büroschreibmaschinen erstellt werden, wobei alle für
eine Übertragung in Betracht kommenden und empfangsseitig
darstellbaren alphanumerischen Zeichen in einer vorgegebenen Reihenfolge mit definierten Positionen auf die Mustervorlage geschrieben werden. Die alphanumerischen Zeichen können auch handschriftlich auf die Mustervorlage geschrieben werden. Die eindeutige Übertragung handschriftlicher Zeichen ist möglich, wenn die zu übertragenen handschriftlichen Zeichen mit denjenigen übereinstimmen, die zuvor von der Mustervorlage gelesen und in das System eingespeichert wurden. Das Eingabegerät ETf dient zum Lesen sowohl der Mustervorlagen als auch der Vorlagen mit den zur Übertragung bestimmten alphanumerischen Telefaxzeichen.

Die Mustervorlage, die alphanumerische Zeichen in einer bestimmten Darstellungsform, z.B. die Schrifttypen einer bestimmten Schreibmaschine, aufweist, wird in das als Lesegerät ausgebildete Eingabegerät ETf eingelegt, das die alphanumerischen Zeichen in elektrische Signale umwandelt. Diese elektrischen Signale werden beispielsweise durch Betätigung eines besonderen Schalters in den Aufnahmespeicher ASp1 eingelesen. Es ist auch möglich, im Aufnahmespeicher ASp1 entsprechend großer Kapazität die Informationen mehrerer alphanumerischer Zeichensätze abzuspeichern. Jeder Zeichensatz kann dabei in der Weise adressiert werden, daß die Adresse beispielsweise über eine Tastatur am Eingabegerät ETf in den Aufnahmespeicher ASp1 eingegeben wird. Zur Übertragung alphanumerischer Zeicheninformationen einer bestimmten Darstellungsform ist dann die zugehörige Adresse über das Eingabegerät ETf an den Aufnahmespeicher ASp1 weiterzuleiten. Die Adressierung kann jedoch auch automatisch, d.h. ohne manuelle Eingabe, in der Weise erfolgen, daß die Zeichensätze zum Beispiel entsprechend der Reihenfolge ihrer Eingabe im Aufnahmespeicher ASp1 adressiert werden.

Zeichen eines bestimmten Zeichensatzes können ohne Betätigung einer Tastatur, z.B. durch eine in FIG 2 nicht dargestellte Logikschaltung erkannt werden. Ebenso können die Vorlagen mit den zur Übertragung bestimmten alphanumerischen Zeichen Markierungen tragen, die die Adressen
der zugehörigen Zeichensätze kennzeichnen. Zeichensätze
mit Zeichen verschiedener Darstellungsformen sind im
Aufnahmespeicher ASp1 gegeneinander austauschbar. Ein
solcher Austausch wird beispielsweise dann vorgenommen
werden, wenn Schreibmaschinen, die zur Herstellung der
Mustervorlagen dienen und unterschiedliche Schrifttypen aufweisen, gegeneinander ausgetauscht werden.

Zur Übertragung alphanumerischer Zeichen einer bestimmten
Darstellungsform von einer Vorlage wird diese dem Eingabegerät ETf zugeführt. Der Übertragungsvorgang sowie die
unmittelbar zuvor in der Umsetzereinrichtung U1 durchzuführenden Verfahrensschritte können beispielsweise durch
eine Markierung an der Vorlage oder durch Betätigung
einer Tastatur am Eingabegerät ETf ausgelöst werden.
Die vom Eingabegerät ETf gelesenen Telefaxzeichen
werden in elektrische Signale umgewandelt, die durch
den Übertragungsbefehl an den Pufferspeicher PSp1 weitergeleitet werden. Die Vergleichsschaltung V1 vergleicht
die Inhalte der Speicherinhalte des Aufnahmespeichers
ASp1 mit denen des Pufferspeichers PSp1. Enthält
der Aufnahmespeicher ASp1 mindestens zwei Zeichensätze,
so werden bei Eingabe eines Adressierbefehls zur Adressierung eines Zeichensatzes mit alphanumerischen Zeichen
einer bestimmten Darstellungsform nur die entsprechenden
Speicherinhalte überprüft. Ohne besondere Eingabe eines
solchen Adressierbefehls wird durch eine in FIG 2 nicht
dargestellte Logikschaltung mit der Erkennung des ersten
Zeichens von einer Vorlage auch die Darstellungsform
der übrigen Zeichen auf der Vorlage erkannt.
Die Vergleichsschaltung V1 erzeugt nach Erkennung des zur
Übertragung bestimmten alphanumerischen Telefaxzeichens
in Verbindung mit der Ansteuerschaltung ASt1 einen Ansteuerbefehl, der aus dem Teletexspeicher TtSp das dem zur
Übertragung bestimmten alphanumerischen Telefaxzeichen äquivalente Teletexzeichen abruft und auf den Übertragungsweg leitet. Empfangsseitig können die übertragenen
Informationen wie schon anhand von FIG 1 erläutert
wurde, direkt durch ein Teletexempfangsgerät ATt dargestellt werden. Darüberhinaus lassen sich die übertragenen Informationen auch durch ein Telefaxempfangsgerät
ATf darstellen. Hierzu ist eine Umsetzeinrichtung U2
erforderlich, die beispielsweise gemäß der Darstellung
in FIG 3 ausgebildet sein kann. Diese Umsetzeinrichtung
enthält einen Aufnahmespeicher ASp2, einen Pufferspeicher
PSp2, eine Vergleichsschaltung V2, eine Ansteuerschaltung
ASt2 und einen Telefaxspeicher TfSp. Die an der Umsetzeinrichtung U2 eintreffende Informationen wird dem Pufferspeicher PSp2 zugeführt. Die Vergleichsschaltung V2
vergleicht die Speicherinhalte des Pufferspeichers PSp2
mit denen des Aufnahmespeichers ASp2, in dem Teletexzeicheninformationen derjenigen Art abgespeichert werden,
wie sie von der Sende- zur Empfangsseite übertragen werden.
Die Vergleichsschaltung V2 erzeugt nach Erkennung der
übertragenen alphanumerischen Teletexzeicheninformationen
in Verbindung mit der Ansteuerschaltung ASt2 einen Ansteuerbefehl, der aus dem Telefaxspeicher TfSp das dem
übertragenen Teletexzeichen äquivalente Zeichen in Telefaxcodierung abruft und zur graphaischen Wiedergabe
an das Ausgabegerät ATf weiterleitet.

8 Patentansprüche

Patentansprüche

1. System zur Übertragung von alphanumerischen Telefaxzeicheninformationen mindestens einer Darstellungsform über einen Teletexübertragungsweg, beispielsweise auch über einen Fernsprechübertragungsweg in einer Fernsprechanlage bzw. zwischen verschiedenen Fernsprechanlagen, dadurch gekennzeichnet, daß alle alphanumerischen Telefaxzeicheninformationen jeweils einer Darstellungsform in einer vorgegebenen Reihenfolge ihrem Bedeutungsinhalt entsprechend äquivalenten Teletexzeichen zugeordnet werden, daß zur Übertragung jeweils eines alphanumerischen, dem äquivalenten Teletexzeichen zugeordneten Telefaxzeichens dieses als solches erkannt wird und daß das durch die Zuordnung bestimmte Teletexzeichens an den Übertragungsweg abgegeben wird.

2. System nach Anspruch 1, dadurch gekennzeichnet, daß zur Übertragung eines oder einer Mehrheit von alphanumerischen Telefaxzeichen der gleichen Darstellungsform die Erkennung mit Hilfe einer dem System extern zugeführten Information über die Darstellungsform erfolgt.

3. System nach Anspruch 1, dadurch gekennzeichnet, daß zur Übertragung eines oder einer Mehrheit von alphanumerischen Telefaxzeichen der gleichen Darstellungsform die Erkennung ohne eine dem System extern zugeführte Information über die Darstellungsform erfolgt.

4. System nach einem der Ansprüche 1 bis 3, dadurch gekennzeichnet, daß die an den Teletexübertragungsweg abgegebenen Teletexzeicheninformationen auf Teletexempfangsgeräten (ATt) wiedergegeben werden.

5. System nach einem der Ansprüche 1 bis 3, dadurch gekennzeichnet, daß die an den Teletexübertragungsweg abgegebenen Teletexzeicheninformationen nach Rückumsetzung in Telefaxzeicheninformationen auf Telefaxempfangsgeräten (ATf) wiedergegeben werden.

6. Anordnung zur Verwirklichung des Systems nach einem der Ansprüche 1 bis 5, dadurch gekennzeichnet, daß sendeseitig ein Eingabegerät (ETf) für Telefaxzeicheninformationen sowie eine mit diesem verbundene Umsetzeinrichtung (U1) zur Umsetzung von Telefax- in Teletexzeicheninformationen vorgesehen ist.

7. Anordnung nach Anspruch 6, dadurch gekennzeichnet, daß die Umsetzeinrichtung (U1) einen Aufnahmespeicher (ASp1) zur Aufnahme der den durch das Eingabegerät (ETf) von einer Mustervorlage gelesenen alphanumerischen Zeichen entsprechenden und von diesem umgeformten elektrischen Zeicheninformationen aufweist, einen Pufferspeicher (PSp1) zur Zwischenspeicherung der zur Übertragung bestimmten, den durch das Eingabegerät (ETf) gelesenen alphanumerischen Zeichen entsprechenden und von diesem umgeformten elektrischen Zeicheninformationen, eine Vergleichsschaltung (V1) zur Erkennung der zu übertragenden, im Pufferspeicher (PSp1) zwischengespeicherten Zeicheninformationen mittels eines Vergleichs des Speicherinhalts des Aufnahmespeicher (ASp1) sowie eine von der Vergleichsschaltung (V1) gesteuerte Ansteuerschaltung (ASt1) zur Erzeugung eines Ansteuerbefehls, der aus dem der Ansteuerschaltung (ASt1) nachgeschalteten Teletexspeicher (TtSp) das dem zur Übertragung bestimmten alphanumerischen Telefaxzeichen äquivalente Teletexzeichen abruft und auf den Übertragungsweg leitet.

8. Anordnung zur Verwirklichung des Systems nach Anspruch 5, dadurch gekennzeichnet, daß die empfangsseitige Rückumsetzung der übertragenen Teletexzeicheninformationen in Telefaxzeicheninformationen durch eine Umsetzeinrichtung (U2) erfolgt, die einen Aufnahmespeicher (ASp2) zur Aufnahme von Musterteletexzeicheninformationen aufweist, einen Pufferspeicher (PSp2) zur Zwischenspeicherung der übertragenen Teletexzeicheninformationen, eine Vergleichsschaltung (V2) zur Erkennung der übertragenen, im Pufferspeicher (PSp2) zwischengespeicherten Zeicheninformationen mittels eines Vergleichs des Speicherinhalts des Aufnahmespeichers (ASp2) sowie eine von der Vergleichsschaltung (V2) gesteuerte Ansteuerschaltung (ASt2) zur Erzeugung eines Ansteuerbefehls, der aus dem der Ansteuerschaltung (ASt2) nachgeschalteten Telefaxspeicher (TfSp) die der übertragenen Teletexzeicheninformation äquivalente Telefaxzeicheninformation abruft und zur graphischen Wiedergabe an ein Ausgabegerät (ATf) für Telefax weiterleitet.

1/1

FIG 1

FIG 2

FIG 3